# EUROPEAN PATENT APPLICATION

(11) **EP 0 861 770 A1**
(43) Date of publication of application: **02.09.1998**
(21) Application number: 97200547.4
(22) Date of filing: 26.02.1997
(51) Int. Cl.: B62M 23/02

(54) **Electrical drive for a bicycle**

(71) Applicant: MERIDA INDUSTRY CO., LTD., Meikang Village, Tatsun Hsiang, Changhua Hsien (TW)
(72) Inventor: Tseng, Diing-huang, Tatsun Hsiang, Changhua Hsien (TW)
(74) Representative: Ferguson, Alexander

(57) **Abstract**

An electrical drive includes a housing (12) mounted around a crank axle (40) of a bicycle. A drive shaft (30) is rotatably mounted around the crank axle (40) and a chain wheel is fixedly mounted around a first end portion (302) of the drive shaft. A single direction bearing (21) is fitted around the drive shaft (30) and a beveled gear (20) is mounted around the single direction bearing (21). A sensing race (33) is mounted on a second end portion (304) of the drive shaft (30) for rotating the drive shaft (30) along single direction only. A sensing interface (332) is mounted along an outer wall of the sensing race (33). A linking member (32) is fixedly mounted between the crank axle (40) and the sensing race (33). A speed sensing unit (38) is located adjacent to the sensing interface for sensing a rotational speed of the crank axle.

## Description

The present invention relates to an electrical drive for a bicycle.

A conventional electrical drive can output a determined power to co-operate with physical pedaling of a rider so as to drive a bicycle synchronously, thereby providing a proper assistance for moving the bicycle. However, the electric drive cannot precisely control power required for powering the bicycle, thereby easily causing a waste of power supply.

In accordance with one aspect of the present invention, there is provided an electrical drive including a housing mounted around a crank axle of a bicycle. A drive shaft is rotatably mounted around the crank axle and a chain wheel is fixedly mounted around a first end portion of the drive shaft.

A single direction bearing is fitted around the drive shaft and a beveled gear is mounted around the single direction bearing.

A sensing race is mounted on a second end portion of the drive shaft for rotating the drive shaft along a single direction only. A linking member is fixedly mounted between the crank axle and the sensing race.

A velocity sensing unit is located adjacent to the sensing race for sensing a rotational velocity of the crank axle.

In the drawings:
Fig. 1 is a front view of a bicycle in accordance with the present invention;
Fig. 2 is top plan partially cross-sectional view of an electric drive in accordance with the present invention;
Fig. 3 is a partially enlarged view of Fig. 2;
Fig. 4 is a cross-sectional view taken from the line 6-6 of Fig. 3;
Fig. 5 is a partially enlarged view of Fig. 2;
Fig. 6 is a cross-sectional view taken from the line 4-4 of Fig. 5;
Fig. 7 is a partially side cross-sectional view of Fig. 2;
Figs. 8 and 9 are operational views of Fig. 7; and
Fig. 10 is a flow chart of the electric drive.

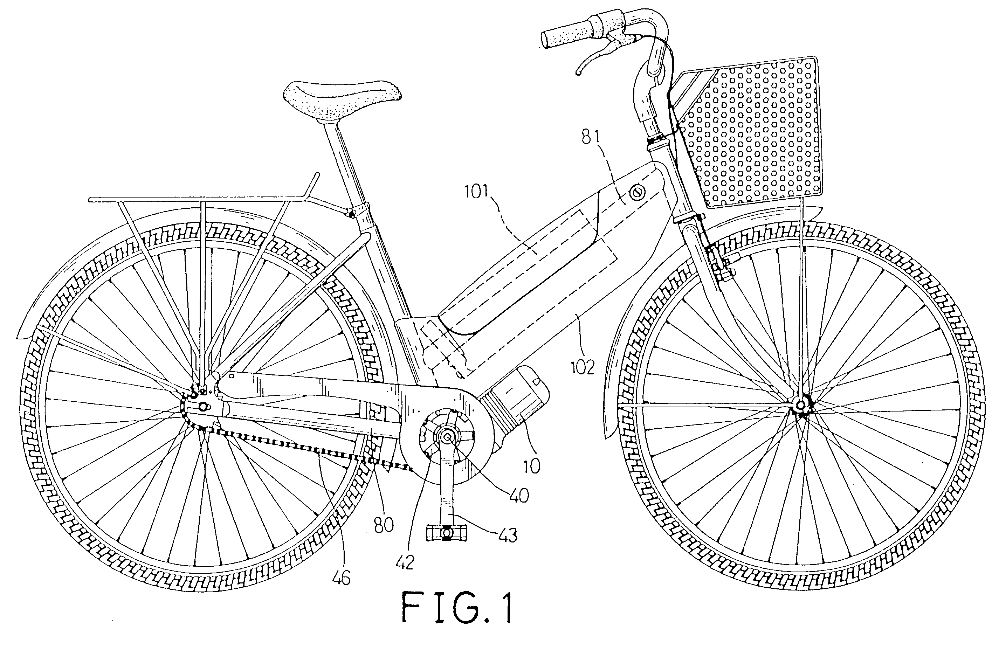

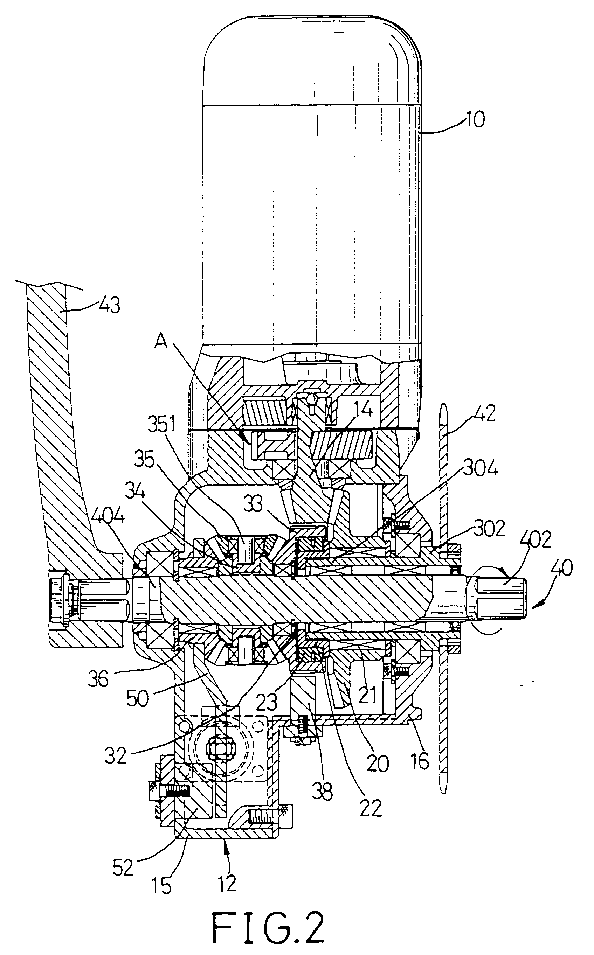

Referring to the drawings, and initially to Figs. 1 and 2, an electrical drive in accordance with the present invention is provided for a bicycle which comprises a down tube 81, a pair of chain stays 80, a crank axle 40 rotatably disposed between the down tube 81 and the chain stays 80, two crank arms 43 each fixedly mounted around first and second end portions 402 and 404 of the crank axle 40, a chain wheel 42 rotatably disposed on the first end portion 402 of the crank axle 40, and a drive chain 46 meshing with the chain wheel 42 to move therewith.

The electrical drive comprises a housing 12 mounted around the crank axle 40 and including a first half body 15 and a second half body 16 fixedly coupled with each other.

A drive shaft 30 is rotatably mounted around the crank axle 40 and has a first end portion 302 located adjacent to the first end portion 402 of the crank axle 40 and a second end portion 304. The chain wheel 42 is adapted to be fixedly mounted around the first end portion 302 of the drive shaft 30.

A single direction bearing 21 is fitted around the drive shaft 30 and a beveled gear 20 is mounted around the single direction bearing 21.

A driving mechanism mounted in the housing 12 for driving the beveled gear 20. The driving mechanism includes a gear train (A) having a second beveled gear 14 meshing with the beveled gear 20, a motor 10 fixedly attached to the housing 12 for driving the gear train (A), and a battery box 101 fixedly mounted on the down tube 81 for supplying power to the motor 10.

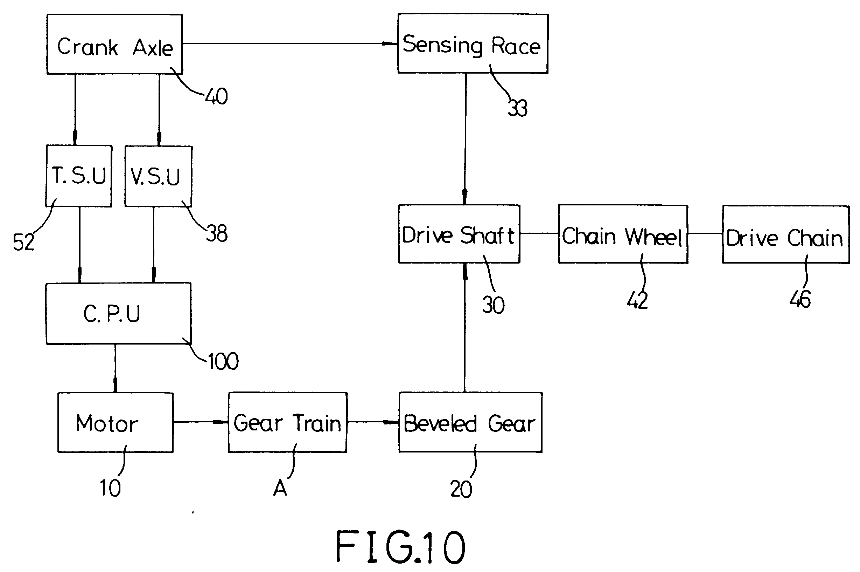

A container 102 is mounted around the down tube 81 for containing therein a central processing unit 100 (see Fig. 10).

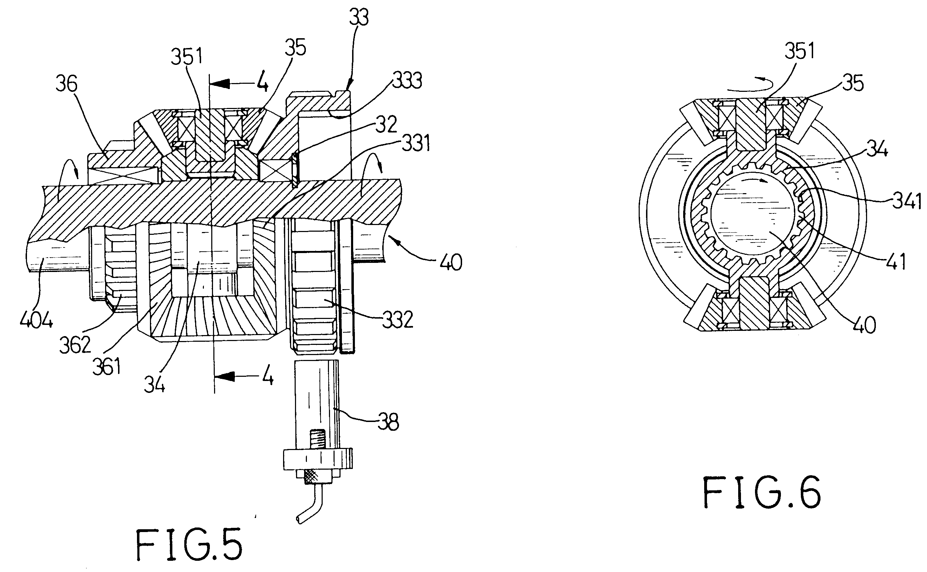

Referring to Figs. 2-4, a sensing race 33 is mounted on the second end portion 304 of the drive shaft 30 for rotating the drive shaft 30 along a single direction only, and a sensing interface 332 (see Fig. 5) is mounted along an outer wall of the sensing race 33.

A linking member 32 is fixedly mounted between the crank axle 40 and the sensing race 33 for rotating the sensing race 33 by the crank axle 40.

A velocity sensing unit 38 is mounted on the housing 12 and located adjacent to the sensing interface 332 for sensing a rotational velocity of the crank axle 40.

The sensing race 33 includes an inner wall with a plurality of teeth 333 formed thereon. A ratchet base 22 is fixedly mounted on the second end portion 304 of the drive shaft 30 and has a plurality of recesses 222 defined along an outer wall thereof. A plurality of pawls 23 each have a first end pivotally received in one of the recesses 222 and a second end detachably meshing with each of the teeth 333.

Referring to Figs. 5 and 6 with reference to Figs. 2-4, the sensing race 33 forms a meshing surface 331. A drive arm 34 is fixedly mounted on the second end portion 404 of the crank axle 40. A pivot axle 351 is fixedly mounted on an outer wall of the drive arm 34, and a drive gear 35 is rotatably mounted on the pivot axle 351 and meshes with the meshing surface 331.

The drive arm 34 includes an inner wall defining a plurality of splines 341 therein, and the crank axle 40 forms a plurality of racks 41 each received in one of the splines 341.

Referring to Figs. 5-7 with reference to Fig. 2, a sensing gear 36 is rotatably mounted on the second end portion 404 of the crank axle 40. A beveled surface 361 is formed on the sensing gear 36 and meshes with the drive gear 35.

A sensing arm 50 is mounted on the sensing gear 36 to rotate therewith. The sensing arm 50 includes an inner wall forming a plurality of inner teeth 51, and the sensing gear 36 forms a plurality of drive teeth 362 each meshing with one of the inner teeth 51.

A spring attachment 60 is fixedly mounted on the housing 12 and is connected with one distal end of the sensing arm 50. A torsion sensing unit 52 is mounted on the housing 12 and located adjacent to the spring attachment 60 for sensing a torsion exerted on the crank axle 40.

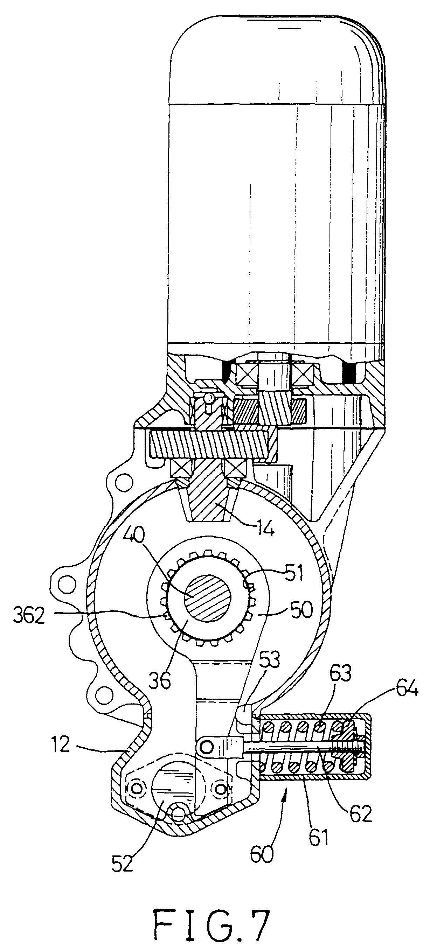

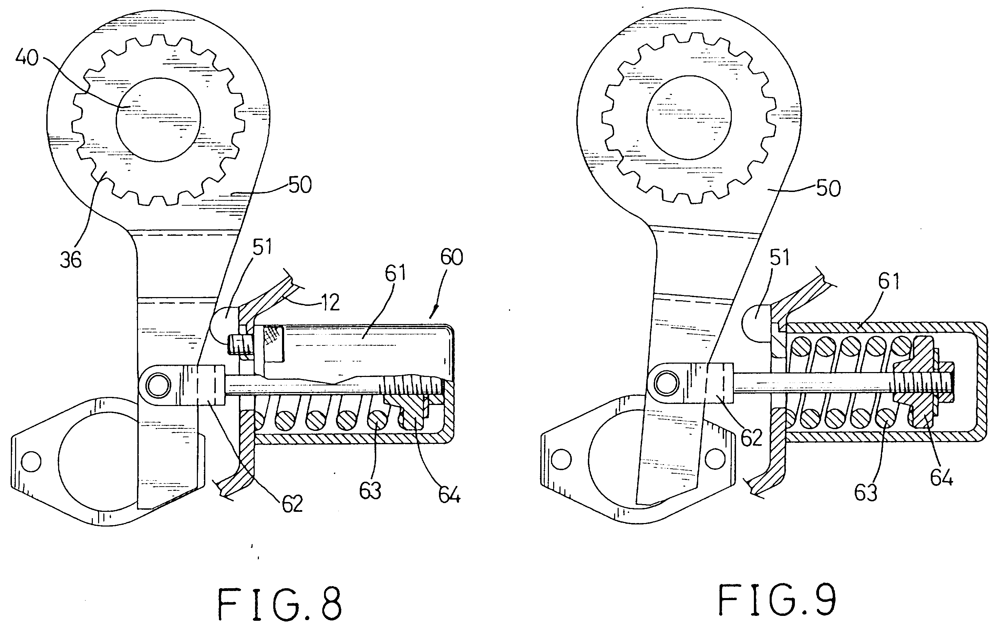

Referring to Figs. 7-9, the spring attachment 60 includes a casing 61 fixedly mounted on the housing 12, a linking rod 62 movably mounted in the casing 61 and having a first end pivotally attached to the distal end of the sensing arm 50, a plug 64 fixedly mounted on a second end of the linking rod 62, and a sensing spring 63 mounted around the linking rod 62 and urged between the plug 64 and an outer wall of the housing 12.

Preferably, a stop 53 is mounted on an inner wall of the housing 12 for limiting a further movement of the distal end of the sensing arm 50.

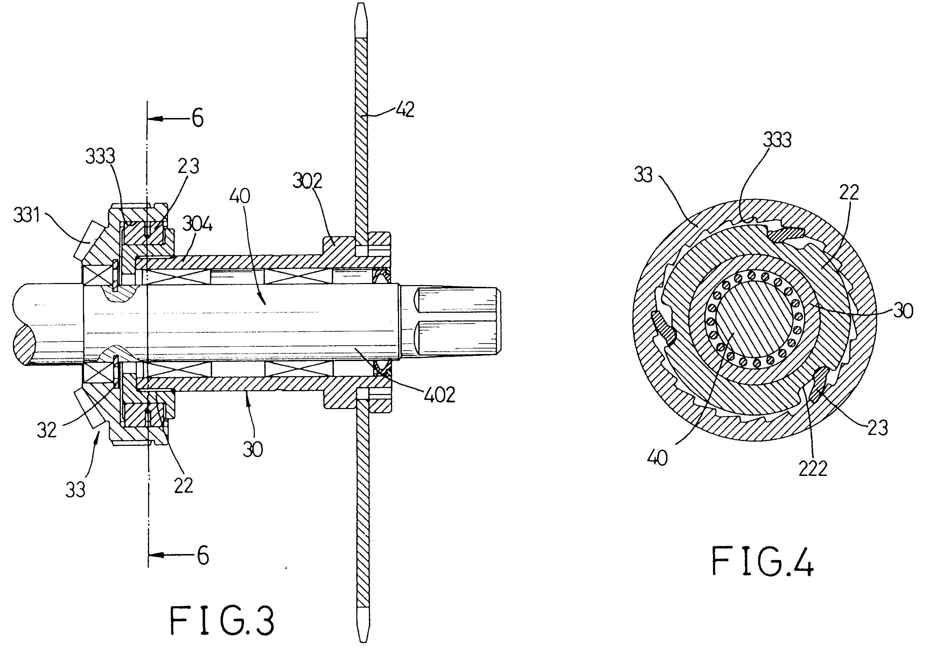

In operation, referring to Figs. 1 and 2 with reference to Figs. 3-6, the crank axle 40 can be rotated by a rider exerting a torque on the two crank arms 43, thereby rotating the sensing race 33 which can rotate the drive shaft 30 along a normal direction only, thereby rotating the chain wheel 42 which meshes with the drive chain 46 so as to move the bicycle forwardly.

In such a situation, the beveled gear 20 is not rotated with the drive shaft 30 due to the single direction bearing 21 idling.

Then, the second beveled gear 14 of the gear train (A) can be driven by the motor 10 to rotate the beveled gear 20 which can rotate the drive shaft 30 along the normal direction only so as to rotate the chain wheel 50, thereby providing an assistance for moving the bicycle forwardly.

By such an arrangement, the bicycle can be driven to travel forwardly by physical work of the rider and by electrical power synchronously.

The velocity sensing unit 38 located beside the sensing interface 332 can be used to detect the rotational velocity of the crank axle 40.

At the same time, referring to Figs. 5-9, the drive gear 35 can be used to rotate the sensing gear 36 which can rotate the sensing arm 50 which can move the linking rod 62, thereby compressing the sensing spring 63.

The torsion sensing unit 52 located beside the sensing arm 50 can be used to detect the torsion exerted on the crank axle 40 by the rider depending on the compression of the sensing spring 63.

Referring to Fig. 10, the velocity sensing unit 38 can input signals indicating rotational velocities of the crank axle 40 and the torsion sensing unit 52 can input signals indicating torsions exerted by the rider on the crank axle 40 into the central processing unit 100 synchronously which can perform an analytic operation so as to determine power required for the motor 10 to drive the gear train (A) thereby precisely controlling the motor 10 to rotate the drive shaft 30, thereby providing a proper assistance for moving the bicycle.

By such an arrangement, the power supplied by the motor 10 to drive the gear train (A) can be controlled, thereby optimizing the efficiency of the supplied electricity.

## Claims

1. An electrical drive for a bicycle which comprises a down tube (81), a pair of chain stays (80), a crank axle (40) rotatably disposed between said down tube (81) and said chain stays (80), and a chain wheel (42) rotatably disposed on a first end portion (402) of said crank axle (40), **characterized in that** said electrical drive comprises:
a housing (12) mounted around said crank axle (40);
a drive shaft (30) rotatably mounted around said crank axle (40) and having a first end portion (302) located adjacent to the first end portion (402) of said crank axle (40), said chain wheel (42) adapted to be fixedly mounted around the first end portion (302) of said drive shaft (30);
a single direction bearing (21) fitted around said drive shaft (30);
a beveled gear (20) mounted around said single direction bearing (21);
a driving mechanism mounted in said housing (12) for driving said beveled gear (20);
a sensing race (33) mounted on a second end portion (304) of said drive shaft (30) for rotating said drive shaft (30) along a single direction only, a sensing interface (332) mounted along an outer wall of said sensing race (33);
a linking member (32) fixedly mounted between said crank axle (40) and said sensing race (33) for rotating said sensing race (33) by said crank axle (40); and
a velocity sensing unit (38) mounted on said housing (12) and located adjacent to said sensing interface (332) of said sensing race (33) for sensing a rotational velocity of said crank axle (40).

2. The electrical drive in accordance with claim 1, **characterized in that** said sensing race (33) forms a meshing surface (331), a drive arm (34) fixedly mounted on a second end portion (404) of said crank axle (40), a pivot axle (351) fixedly mounted on an outer wall of said drive arm (34), and a drive gear (35) rotatably mounted on said pivot axle (351) and meshing with said meshing surface (331).

3. The electrical drive in accordance with claim 2, **characterized in that** said electric drive further comprises a sensing gear (36) rotatably mounted on the second end portion (404) of said crank axle (40), a beveled surface (361) formed on said sensing gear (36) and meshing with said drive gear (35), a sensing arm (50) mounted on said sensing gear (36) to rotate therewith, a spring attachment (60) fixedly mounted on said housing (12) and connected with one distal end of said sensing arm (50), and a torsion sensing unit (52) mounted on said housing (12) and located adjacent to said spring attachment (60) for sensing a torsion exerted on said crank axle (40).

4. The electrical drive in accordance with claim 3, **characterized in that** said spring attachment (60) includes a casing (61) fixedly mounted on said housing (12), a linking rod (62) movably mounted in said casing (61) and having a first end pivotally attached to said distal end of said sensing arm (50), a plug (64) fixedly mounted on a second end of said linking rod (62), and a sensing spring (63) mounted around said linking rod (62) and urged between said plug (64) and an outer wall of said housing (12).
